**Europäisches Patentamt**

**European Patent Office**

**Office européen des brevets**

(19)

(11) **EP 1 408 682 A1**

(12) **EUROPEAN PATENT APPLICATION**

(43) Date of publication:
**14.04.2004 Bulletin 2004/16**

(51) Int Cl.7: **H04N 3/223**

(21) Application number: **03103430.9**

(22) Date of filing: **17.09.2003**

| | |
|---|---|
| (84) Designated Contracting States:<br>**AT BE BG CH CY CZ DE DK EE ES FI FR GB GR**<br>**HU IE IT LI LU MC NL PT RO SE SI SK TR**<br>Designated Extension States:<br>**AL LT LV MK**<br><br>(30) Priority: **01.10.2002 FR 0212298**<br><br>(71) Applicant: **Thomson Licensing S.A.**<br>**92100 Boulogne Billancourt (FR)**<br><br>(72) Inventors:<br>• **Blonde, Laurent**<br>**35235 Thorigne-Fouillard (FR)** | • **Borel, Thierry**<br>**35135 Chantepie (FR)**<br>• **Doyen, Didier**<br>**35340 La Bouexière (FR)**<br>• **Hoelzemann, Herbert**<br>**57629 Merkelbach (DE)**<br>• **Petit, Serge**<br>**21560 Bressey (FR)**<br>• **Rivero, Daniel**<br>**21000 Dijon (FR)**<br><br>(74) Representative: **Cour, Pierre et al**<br>**THOMSON,**<br>**46, Quai A. Le Gallo**<br>**92100 Boulogne (FR)** |

(54) **Method of processing images for the correction of the distortions in a cathode ray tube**

(57)     The invention relates to a method of processing video images which is intended to correct the distortions created by the instability of the high voltage circuit of the cathode ray tube display device during the displaying of the images. It is more particularly intended for correcting the global zoom and the local zoom affecting the images displayed by the cathode ray tube device.

FIG.4

**Description**

The invention concerns a method of processing images for the correction of the distortions in a cathode ray tube. More particularly, the invention concerns the distortions related to the problems of regulating the high voltage.

In the design of current cathode ray tube televisions, certain defects are neglected on account of their weak perception during the displaying of the video images. Such is the case of the residual defect of stability of the high voltage electronics of the television. When one attempts to display images comprising straight lines, as for example images of information technology type, this defect modifies the appearance of these lines which then look deformed on the screen.

The occurrence of this defect is dependent on the luminous intensity of the images displayed. The distortion generated takes on two forms depending on whether the luminous intensity of the image is average or high. Here, the luminous intensity of an image denotes the sum of the grey levels of the three components R, G and B of the collection of pixels of the image, this sum being weighted by the television adjustment factors, namely light, contrast and colour.

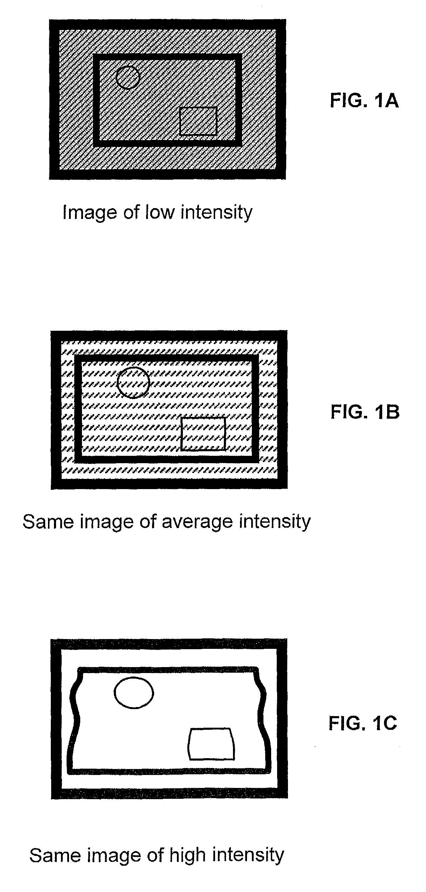

Thus, when the luminous intensity of the current image is average, the distortion takes the form of a zoom affecting the entire image, called the global zoom, whose factor varies as a function of the intensity of the current image and of the previous images. This distortion is shown in Figure 1 B representing an image of average luminous intensity, to be compared with Figure 1A, representing the same image but with a weaker luminous intensity.

This global zoom increases as the luminous intensity of the image increases. A high luminous intensity value having been reached, the global zoom ceases to increase and is supplemented with an X-wise zoom (horizontal) varying according to the lines of the image. This case is illustrated in Figure 1 C.

To suppress these zoom effects, it is known to regulate the high voltage independently for the gun and the deflectors of the tube. This solution is relatively expensive and hardly usable in a television for the mass market. Less expensive solutions consist in using a circuit for regulating the high voltage supply voltage which reacts as a function of the voltage of the gun. Such regulation makes it possible to obtain good results for television images but does not allow correct screening of strongly contrasted images such as computer screens when the television is used as a monitor.

An aim of the invention is to propose a less expensive solution which makes it possible to correct the distortions created by the variation in the supply voltage to the cathode ray tube. According to the invention, these distortions are corrected by a processing of the images prior to their display.

Hence, the invention is a method of processing a sequence of video images to be displayed with a cathode ray tube display device, which method is intended to correct the distortions created by the instability of the high voltage circuit of the cathode ray tube during the displaying of the said images and is characterized in that it consists in:

- characterizing the distortions created by the cathode ray tube, and
- for each image of the sequence to be displayed, calculating the distortions affecting it and generating a precorrected image comprising the inverse distortions.

More particularly, if the intensity of the image to be displayed is not very high, the distortion affecting the displaying of the current image is a global zoom varying as a function of the luminous intensity of the said current image and of that of the images which precede it in the sequence to be displayed. According to the invention, the following steps are then performed:

- determining the global zoom created by the cathode ray tube as a function of the luminous intensity of the current image and of that of the previous images; and
- for each image of the sequence to be displayed, calculating the global zoom affecting the current image and generating a precorrected image by applying the inverse of the said global zoom to the said current image.

Otherwise, if the intensity of the image to be displayed is very high, the distortion affecting the displaying of the current image is twofold. It consists of a global zoom varying as a function of the luminous intensity of the said current image and of that of the images which precede it in the sequence to be displayed and a local zoom affecting each line of the current image and varying as a function of the intensity of the line considered and of those of the lines which precede it in the said current image. According to the invention, the following steps are then performed:

- characterizing the global zoom created by the cathode ray tube as a function of the luminous intensity of the current image and of that of the previous images;
- characterizing the local zoom created by the cathode ray tube as a function of the luminous intensity of the line considered and of that of the previous lines in the image; and
- calculating the global zoom affecting the current image and the local zooms affecting each of its lines and generating a precorrected image by applying, to the whole image, the inverse of the said global zoom and, to each of its lines, the inverse of the local zoom calculated for the line considered.

The subject of the invention is also a cathode ray tube display device implementing this method of image processing.

The characteristics and advantages of the invention which were mentioned above, as well as others, will be more clearly apparent on reading the following description, given in conjunction with the appended drawings in which:

- Fig. 1A to 1C illustrate the display defects due to the instability of the high power circuit of the cathode ray tubes;
- Fig. 2A to 2B illustrate, in the form of charts, the variation in the vertical zoom and in the horizontal zoom of the current image $I_n$ as a function of its luminous intensity;
- Fig. 3 illustrates the operation aimed at calculating a precorrected image of the current image on the basis of the source current image; and
- Fig. 4 summarizes the steps applied to the source video image according to the invention.

The first step of the image processing method of the invention consists in characterizing the defects of the cathode ray tube. This step is carried out at the end of the plant for manufacturing the cathode ray tube television or monitor.

As indicated previously the distortions occur when the luminous intensity of the image reaches an average value and appear differently depending on whether the intensity of the current image is average or high. When the luminous intensity of the current image is average, the image is dilated along both dimensions of the image (X and Y) and affects the whole image. One then speaks of global zoom. The zoom factor varies linearly as a function of the intensity of the current image and of the images which precede it in the sequence to be displayed.

The global zoom affecting a current image, $I_n$, may be modelled as a function of its intensity and of that of the K images preceding it:

$$ZG(I_n) = \frac{\sum_{k=0}^{K} a_{-k} i(I_{n-k}) + b(I_{n-k})}{K+1} \qquad (1)$$

where

- $ZG(I_n)$ denotes the global zoom of the image $I_n$;
- $i(I_{n-k})$ denotes the intensity of the image $I_{n-k}$;

$$
\begin{aligned}
- a_{-k} \quad &= \quad 0 && \text{if} && i(I_{n-k}) < i_{s1} \\
&\quad \alpha_{-k} && \text{if} && i_{s1} < i(I_{n-k}) < i_{s2} \\
&\quad \beta_{-k} && \text{if} && i_{s2} < i(I_{n-k}) < i_{s3} \\
&\quad 0 && \text{if} && i(I_{n-k}) > i_{s3}
\end{aligned}
$$

$$
\begin{aligned}
- b(I_{n-k}) \quad &= 1 && \text{if} && i(I_{n-k}) < i_{s1} \\
&\quad 1 - \alpha_{-k} \cdot i_{s1} && &&\text{if } i_{s1} < i(I_{n-k}) < i_{s2} \\
&\quad 1 - \beta_{-k} \cdot i_{s2} + \alpha_{-k} \cdot (i_{s2} - i_{s1}) && &&\text{if } i_{s2} < i(I_{n-k}) < i_{s3} \\
&\quad 1 - \alpha_{-k} \cdot (i_{s2} - i_{s1}) - \beta_{-k} \cdot (i_{s3} - i_{s2}) && \text{if} && i(I_{n-k}) > i_{s3}
\end{aligned}
$$

The terms $i_{s1}$, $i_{s2}$ and $i_{s3}$ are luminous intensity threshold values and the terms $\alpha_{-k}$ et $\beta_{-k}$ are zoom factors associated with the image $I_{n-k}$.

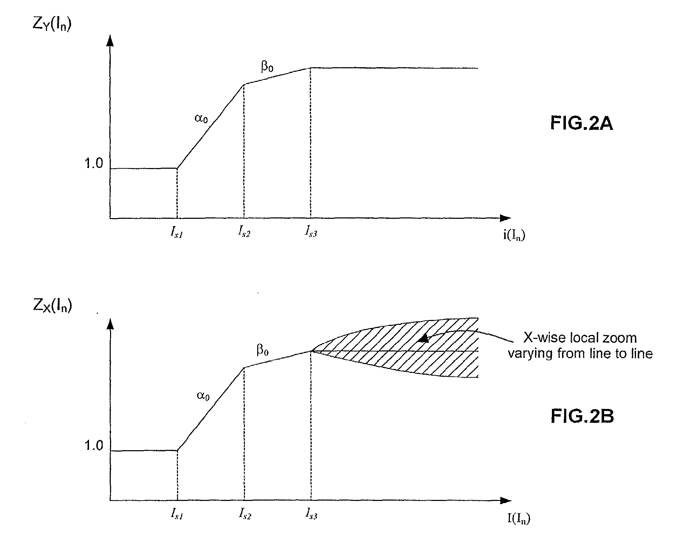

The variations in the Y-wise and X-wise zoom affecting the current image $I_n$ as a function of its luminous intensity are represented, in the form of charts, in Figures 2A and 2B respectively. $Z_X(I_n)$ and $Z_Y(I_n)$ designate respectively the X-wise zoom and the Y-wise zoom of the image $I_n$. In both cases, the zoom ($Z_{X or Y}(I_n) > 1$) commences from the threshold value $i_{s1}$. It increases linearly according to a first zoom factor $\alpha_0$ up to the second threshold value $i_{s2}$ then according to a second zoom factor $\beta_0$ up to a third threshold value $i_{s3}$. Beyond this value of luminous intensity, the Y-wise zoom no longer increases and remains constant whilst the X-wise zoom varies line by line. A phenomenon of X-wise local zoom is in fact added to the X-wise and Y-wise global zoom onwards of the threshold value $i_{s3}$. This local zoom is specific to each line of the image and depends on the intensity of the previous lines in the image considered. The hatched area of Fig. 2B represents the zone of variation of the X-wise local zoom.

The variation in the X-wise local zoom of the line $L_{m+1}$ is given by the following formula:

$$ZL_X(L_{m+1}) = 1+p(L_{m+1}) \qquad (2)$$

with : $p(L_{m+1}) = A(\frac{2f'_{m+1}}{f_m} - \frac{1}{T}) \cdot p(L_m)$ and $f'_{m+1} = i(L_{m+1})/S$
where

- $i(L_{m+1})$ denotes the intensity of the line $L_{m+1}$;
- A, S and T are constants;
- $f_m$ is a function defined in the following manner:

$$f_m = \sqrt{p(L_m) e^{\frac{t}{T}}}$$

with $t = m \cdot \tau$ (the time t is proportional to the line index m).

The characterization of the defects of the cathode ray tube therefore consists in determining, for example, the formulae (1) and (2) and the parameters specific to the cathode ray tube used which come into these formulae, namely the threshold values $i_{s1}$, $i_{s2}$ et $i_{s3}$ and the zoom factors $\alpha_{-k}$ and $\beta_{-k}$.

These parameters are measured experimentally, once and for all, in the factory after manufacture of the tube.

The next step consists in calculating, for each image of the sequence to be displayed, the zoom affecting it. To this end, for each new image to be displayed, the zoom affecting it is calculated with the aid of formulae (1) and (2). This step requires prior calculation of the luminous intensity of each new image. To do this, the column-wise and row-wise sum of the levels displayed in the image is calculated, weighted by the television adjustment factors. This intensity value is stored since it is used for the calculation of the zoom affecting the current image and the K images to follow.

With the aid of formula (1), the global zoom is thus calculated for each new image. According to this formula, an image is affected by a global zoom (ZG>1) if its luminous intensity or the luminous intensity of one of the K images preceding it (K≥5) is greater than the threshold value $i_{s1}$. If its global intensity exceeds $i_{s3}$, it is also affected by a local zoom in each line of the image. The local zoom of each line is calculated through formula (2).

The next step of the method of the invention consists in generating a precorrected image opposing the defects of the tube. This image is obtained by applying, to the source current image received by the television, a zoom which is the inverse of that resulting from the previous step. This inverse zoom causes a displacement of the pixels of the image. For example, the pixel with coordinates $(x_1,y_1)$ in the current image is displaced by the displacement vector $(dx_1,dy_1)$ and has coordinates $(x_1 + dx_1, y_1 + dy_1)$ in the precorrected image.

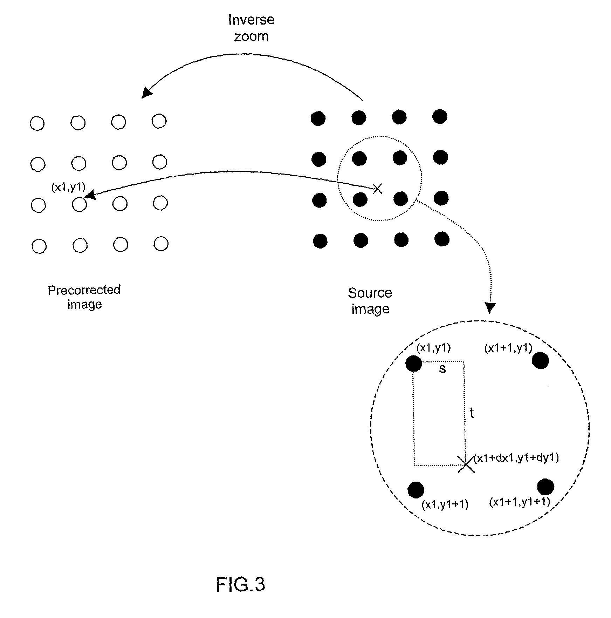

In practice, to create the precorrected image, one starts from an "empty" image containing pixels all having for example a level 0 for each colour and one fills it in with the video levels of the pixels of the current image after application of the inverse zoom. Thus, the pixel with coordinates $(x_1,y_1)$ in the precorrected image receives the video level of the pixel with coordinates $(x_1 + dx_1, y_1 + dy_1)$, of the current image, as shown in Figure 3. If either of the displacements $dx_1$ or $dy_1$, or both, does not correspond to a whole number of pixels, an interpolation is performed, for example of bilinear type, to determine from the video levels of the 4 pixels neighbouring the pixel with coordinates $(x_1 + dx_1, y_1, + dy_1)$ in the current image, the video level of the pixel with the coordinates $(x_1,y_1)$ in the precorrected image.

A bilinear-type interpolation is illustrated in Figure 3. Considered in this figure is a pixel with coordinates (s, t) relative to a pixel with coordinates $(x_1,y_1)$ in the current image. Its luminous intensity $i_{x1+s,y1+t}$ is calculated in the following manner:

$$i_{x1+s,y1+t} = (1-t)[(1-s) \cdot i_{x1,y1} + s \cdot i_{x1,y1+1}] + t[(1-s) \cdot i_{x1+1,y1} + s \cdot i_{x1+1,y1+1}]$$

Other types of interpolation, pertaining for example to a larger number of neighbouring pixels, may be envisaged.

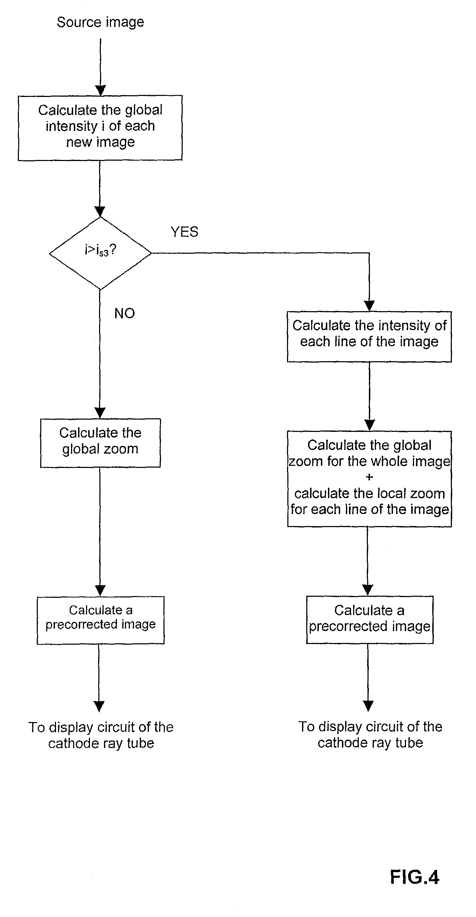

The processing steps for the source current image are summarized in the flow chart of Figure 4:

- calculate the global luminous intensity i of each new image,
- if $i<i_{s3}$, determine the global zoom affecting the current image then calculate the precorrected image comprising the inverse distortions,
- else, if $i>i_{s3}$, measure the luminous intensity of each image line then calculate the global zoom affecting the entire current image and calculate the local zoom affecting the image lines then calculate the precorrected image comprising the inverse distortions.

The resulting precorrected image is supplied to the display circuit of the cathode ray tube so as to restore a distortion-free image on the screen.

This method is implemented in the display circuit of the cathode ray tube television.

As a variant, the distortions created by the cathode ray tube may be characterized differently. They can be characterized by measuring the beam current for the images to be displayed instead of calculating the luminous intensity of the image lines and of the entire image. It is for example possible to determine, from a measurement of the beam current, an approximation of the local x-wise zoom affecting the lines of the current image. This characterization then consists in measuring, for a plurality of reference images, the beam current of each line as well as the corresponding X-wise zoom, then in deducing therefrom a relation between the beam current of the line and the X-wise zoom factor affecting the latter. The implementation of this variant consists for example in sampling the beam current of the current image at the line frequency so as to have one sample per line or in sampling the beam current of the current image at N times the line frequency and subsequently calculating the average of the n successive samples of a line. The X-wise local zoom is then defined for example by the following formula:

$$ZL_x(L_n)=\sigma \cdot C_n + \zeta \cdot D_n + \tau \cdot E_n + \upsilon \cdot F_n$$

where $C_n$ is the beam current of line $L_n$,

$D_n$ is the integrated positive derivative of the beam current $C_n$,

$E_n$ is the integrated negative derivative of the beam current $C_n$, and

$F_n$ is the sliding integral of the beam current $C_n$.

The variables $D_n$, $E_n$ and $F_n$ are defined by the following formulae:

- $D_n$ is equal to $d \cdot D_{n-1} + (C_n - C_{n-1})$ if $C_n > C_{n-1}$ and to 0 if $C_n \leq C_{n-1}$ with $D_0 = 0$;
- $E_n$ is equal to $e \cdot E_{n-1} - (C_n - C_{n-1})$ if $C_n < C_{n-1}$ and to 0 if $C_n \geq C_{n-1}$ with $E_0 = 0$;
- $F_n$ is equal to $f \cdot F_{n-1} + C_n$.

The characterization of the local X-wise zoom from the beam current then consists in determining the parameters $\sigma$, $\zeta$, $\tau$, $\upsilon$, d, e, and f by using reference images.

According to another variant, the global deformation affecting an image may be characterized on the basis of the anode voltage of the tube of the television. The model used is as follows:

$$\begin{cases} x = x_0 + f(x_0) \cdot \Delta V \\ y = y_0 + g(y_0) \cdot \Delta V \end{cases}$$

where

- $(x, y)$ is the final position, after deformation, of a pixel with initial position $(x_0, y_0)$,
- $\Delta V$ is the voltage mismatch between the anode voltage for reaching the position $(x, y)$ and the anode voltage for the position $(x_0, y_0)$, and
- f, and g are functions, dubbed sensitivities, modulating the variation of the anode voltage.

The functions f and g represent respectively the sensitivity along the axes X and Y and have for example the following forms:

$$f(x_0) = \left( \frac{Q_x}{\sqrt{\left(\frac{Q_x^2}{x_0^2}+1\right)\frac{V}{V_0}-1}} - x_0 \right) /(V - V_0)$$

$$g(y_0) = \left( \frac{Q_y}{\sqrt{\left(\frac{Q_y^2}{y_0^2}+1\right)\frac{V}{V_0}-1}} - y_0 \right) /(V - V_0)$$

where

- V is the anode voltage for reaching the position (x, y);
- $V_0$ is the anode voltage for the position $(x_0, y_0)$, with $\Delta V = V - V_0$,
- $Q_x$ and $Q_y$ are the distances, respectively in the dimensions X and Y, between the centre of deflection of the beam and the faceplate of the cathode ray tube.

Complementary functions may be added to this basic model. It is for example possible to add a function dependent on $y_0$ modulating the x coordinate of the pixel.

The deformation model thus defined serves to calculate the position (x, y) on the screen of a pixel normally having the position $(x_0, y_0)$. The method of the invention consists in deforming the image in the inverse sense. To calculate the deformation of the image, the model can be applied to all the pixels of the image or, to save calculation time, to a predetermined number of points per line, the deformation subsequently being propagated to the other points of the line for example by a cubic interpolation. It is important to reevaluate the model with each line so as to be able to take account of the deformations due to sudden variations of the anode voltage for example owing to the presence of a luminous object in the image.

**Claims**

1. Method of processing a sequence of video images to be displayed with a cathode ray tube display device, which method is intended to correct the distortions created by the instability of the high voltage circuit of the cathode ray tube during the displaying of the said images and is **characterized in that** it consists in:

   - characterizing the distortions created by the cathode ray tube, and
   - for each image of the sequence to be displayed, calculating the distortions affecting it and generating a precorrected image comprising the inverse distortions.

2. Method according to Claim 1, **characterized in that**, one of the distortions affecting the displaying of a current image being a global zoom varying as a function of the luminous intensity of the said current image and of that of the images which precede it in the sequence to be displayed, the said method consists in:

   - determining the global zoom created by the cathode ray tube as a function of the luminous intensity of the current image and of that of the previous images; and
   - for each image of the sequence to be displayed, calculating the global zoom affecting the said current image and generating a precorrected image by applying the inverse of the said global zoom to the said current image.

3. Method according to Claim 1, **characterized in that**, the distortions affecting the displaying of a current image being a global zoom varying as a function of the luminous intensity of the said current image and of that of the images which precede it in the sequence to be displayed and a local zoom affecting each line of the said current image and varying as a function of the intensity of the line considered and of those of the lines which precede it in the said current image, the said method consists in:

- characterizing the global zoom created by the cathode ray tube as a function of the luminous intensity of the current image and of that of the previous images;
- characterizing the local zoom created by the cathode ray tube as a function of the luminous intensity of the line considered and of that of the previous lines in the current image; and
- calculating the global zoom affecting the current image and the local zooms affecting each of its lines and generating a precorrected image by applying, to the whole image, the inverse of the said global zoom and, to each of its lines, the inverse of the local zoom calculated for the line considered.

4. Method according to Claim 1, **characterized in that**, the distortions affecting the displaying of a current image being a local zoom affecting each line of the said current image and varying as a function of the beam current necessary for displaying the relevant line and the lines which precede it in the said current image, the said method consists in:

- characterizing the local zoom created by the cathode ray tube as a function of the beam current of the cathode ray tube for the relevant line and for the preceding lines in the current image; and
- calculating the local zooms affecting each of the lines of the current image from measurements of beam current of each of them and generating a precorrected image by applying to each of the lines of the current image the inverse of the local zoom calculated from the relevant line.

5. Method according to Claim 1, **characterized in that** it comprises the following steps:

- characterizing the distortions created by the cathode ray tube for reference images as a function of the tube anode voltages necessary for the display of these images; and
- calculating the distortions affecting the current image from measurements of anode voltages necessary for the display of this image and generating a precorrected image comprising the inverse distortions.

6. Cathode ray tube display device implementing the method of image processing according to one of Claims 1 to 5.

**FIG. 1A**

Image of low intensity

**FIG. 1B**

Same image of average intensity

**FIG. 1C**

Same image of high intensity

FIG.2A

X-wise local zoom varying from line to line

FIG.2B

Inverse
zoom

(x1,y1)

Precorrected
image

Source
image

(x1,y1)                    (x1+1,y1)

s

t

(x1+dx1,y1+dy1)

(x1,y1+1)        (x1+1,y1+1)

FIG.3

Source image

↓

Calculate the global
intensity i of each
new image

↓

i>i$_{s3}$?  —— YES ——→

NO ↓

Calculate the
global zoom

↓

Calculate a
precorrected image

↓

To display circuit of the
cathode ray tube

Calculate the intensity of
each line of the image

↓

Calculate the global
zoom for the whole image
+
calculate the local zoom
for each line of the image

↓

Calculate a
precorrected image

↓

To display circuit of the
cathode ray tube

**FIG.4**

**European Patent Office**

**EUROPEAN SEARCH REPORT**

Application Number

EP 03 10 3430

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 1998, no. 08, 30 June 1998 (1998-06-30) & JP 10 070672 A (TOSHIBA CORP;TOSHIBA AVE CORP), 10 March 1998 (1998-03-10) * abstract * | 1,2,4-6 | H04N3/223 |
| A | ----- | 3 | |

TECHNICAL FIELDS SEARCHED (Int.Cl.7)

H04N

The present search report has been drawn up for all claims

| Place of search | Date of completion of the search | Examiner |
|---|---|---|
| THE HAGUE | 30 January 2004 | Bequet, T |

EPO FORM 1503 03.82 (P04C01)

**ANNEX TO THE EUROPEAN SEARCH REPORT
ON EUROPEAN PATENT APPLICATION NO.**

EP 03 10 3430

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2004

| Patent document cited in search report | Publication date | Patent family member(s) | Publication date |
|---|---|---|---|
| JP 10070672 A | 10-03-1998 | NONE | |